# EUROPÄISCHE PATENTSCHRIFT

(11) **EP 0 780 102 B1**
(45) Veröffentlichungstag und Bekanntmachung des Hinweises auf die Patenterteilung: **05.06.2002**
(21) Anmeldenummer: 96119722.5
(22) Anmeldetag: 09.12.1996
(51) Int. Cl.: A61C 17/02, A61C 1/08, G05D 23/00

(54) **Verfahren zur Steuerung der Heizleistung eines Heizelementes zur Erwärmung von relativ kleinen Mengen eines Mediums wie Luft und/oder Wasser, bei einem zahnärztlichen Gerät, insbesondere bei einem Spritzhandstück**
Method for controlling the heating power of a heating element for heating relatively small quantities of a medium like air and/or water in a dental device, in particular in a spray hand-piece
Méthode de commande de la puissance de chauffage d'un élément de chauffage pour chauffer une quantité relativement petite d'un médium tel que l'air et/ou l'eau dans un appareil dentaire, en particulier dans une pièce à main de pulvérisation

(30) Priorität: 22.12.1995 DE 19548444
(43) Veröffentlichungstag der Anmeldung: 25.06.1997
(73) Patentinhaber: Sirona Dental Systems GmbH, 64625 Bensheim (DE)
(72) Erfinder: Landgraf, Hermann, 64653 Lorsch (DE); Pabst, Josef, 68542 Heddesheim (DE); Ackermann, Werner, Dipl.-Ing., 64367 Mühltal (DE)
(74) Vertreter: Sommer, Peter

(56) Entgegenhaltungen:
- EP-A- 0 525 443
- DE-A- 2 920 009

## Beschreibung

Verfahren zur Steuerung der Heizleistung eines Heizelementes zur Erwärmung von relativ kleinen Mengen eines Mediums wie Luft und/oder Wasser, in einem zahnärztlichen Gerät, insbesondere in einem Spritzhandstück.

Bei zahnärztlichen Geräten, insbesondere bei zahnärztlichen Spritzhandstücken ist es bekannt (DE-A-29 20 009), die zur Erwärmung der Medien Luft und Wasser eingesetzten Heizelemente, in der Regel sind dies als Durchlauferhitzer ausgebildete Heizpatronen, in Abhängigkeit vom Mediendurchfluß durch ein Schaltelement ein- und auszuschalten. Dabei wird mit Hilfe eines im Strömungsweg des Mediums angeordneten steuerbaren Halbleiters, z. B. eines temperaturabhängigen Widerstandes, verhindert, daß die Heizelemente bei nicht strömendem Medium eingeschaltet werden können. Durch das meist mit einem dem Medium zugeordneten Durchflußventil gekoppelte Schaltelement wird die Heizleistung bei etwa 70 bis 100 % des Mediendurchflusses geschaltet. Praktisch bedeutet dies, daß nur eine Ja/Nein-Schaltung in einem Punkt vorliegt, bei dem das Medium erwärmt wird. Davor bleibt das durchfließende Medium kalt. Beim Einschalten liegt somit ein unerwünscht langer Bereich kalter Medienabgabe vor. Ein weiterer Nachteil ist darin zu sehen, daß die Heizleistung mit diesem Aufbau nur in einem Punkt der gewünschten Temperatur des Mediums angepaßt ist. Abweichend davon ist das Medium kälter oder wärmer.

Aus EP-A-0 525 443 ist es ferner bekannt, die Heizleistung dem Mediumverbrauch anzupassen, indem die Heizleistung mit Hilfe einer Impulspaketsteuerung, welche ein im Heizstromkreis liegendes und von einem Stellglied betätigbares Schaltelement (Triac oder Thyristor) umfaßt, zwischen Null (abgeschaltete Heizung), einem Heizungszwischenbereich und einer maximalen Heizleistung eingestellt werden kann.

In der zahnärztlichen Technik ist es an sich weiterhin bekannt, die Heizleistung der Heizelemente in Abhängigkeit von der Medientemperatur zu regeln. Ein Regelkreis ist aber nicht nur relativ aufwendig, er ist auch hinsichtlich der anwendungsgemäßen Handhabung problematisch. Eine besondere Problematik ergibt sich insbesondere bei zahnärztlichen Spritzhandstücken. Bedingt durch die vorgegebene Baugröße des Handstükkes selbst und der dort unterzubringenden Heizelemente, müssen diese an sich sehr leistungsstark ausgelegt sein, um das durchströmende Medium bei dem kleinen Bauvolumen sehr rasch auf Körpertemperatur erwärmen zu können. Insbesondere wegen der geringen Medienvolumina in den Heizelementen (Heizpatronen) werden also sehr hohe Anforderungen an die Leistungsanpassung bei wechseldem Mediendurchfluß gestellt.

Bekannt ist es weiterhin, temperierte Medien über relativ großvolumige Speicher anzubieten, wobei das Medium über eine Ringleitung an die Austrittsstelle geführt wird. Eine solche Lösung ist jedoch aus hygienischen Gründen abzulehnen.

Weitere, an sich bekannte Steuerungen, wie Phasenanschnittsteuerungen oder variable Impulspaketsteuerungen, wie sie beispielsweise in der EP-A-0 525 443 beschrieben sind, haben den Nachteil, daß sie entweder relativ hohe Störemmissionen aufweisen oder daß mit ihnen keine gleichmäßige Leistungsabgabe möglich ist.

Der im Anspruch 1 angegebenen Erfindung liegt die Aufgabe zugrunde, gegenüber dem Stand der Technik eine Verbesserung anzugeben, insbesondere mit dem Ziel, mit vertretbarem Aufwand eine technisch machbare Lösung zu schaffen, die im besonderen der Forderung gerecht wird, bei schnellen Mediendurchflußänderungen auch sofort die entsprechende Heizleistung anzubieten.

Gemäß der Erfindung wird dieses Ziel dadurch erreicht, daß in Abhängigkeit von der Durchflußvorgabe eine der Vorgabe entsprechende elektrisch verarbeitbare Größe abgeleitet wird, die einer bestimmten Heizleistung entspricht, deren für eine bestimmte Medientemperatur erforderliche Größe entsprechend einer in einem elektronischen Verarbeitungsbaustein abgelegten Kennlinie zur Verfügung gestellt wird.

Die Erfindung fußt dabei auf der Erkenntnis, daß Halbwellen im Nulldurchgang geschaltet werden. Die dabei entstehende Quantelung der Leistungszuführung wird in eine quasi-analoge Leistungszuführung dadurch überführt, indem durch die Asynchronität zweier Frequenzen, die einerseits aus der Netzfrequenz und andererseits aus einem Signal eines Gebers generiert werden, eine Anpassung der notwendigen Halbwellenanzahl innerhalb von kurzen Zeitintervallen vorgenommen wird. Diese Zeitintervalle sind kürzer als die Integrationszeiten von den Heizelementen. Die Mittelung der Halbwellenanzahl ergibt somit eine quasi-analoge Leistungseinbringung in die Medien.

Weitere Vorteile und Ausgestaltungen der Erfindung ergeben sich aus der nachfolgenden Beschreibung eines Ausführungsbeispiels

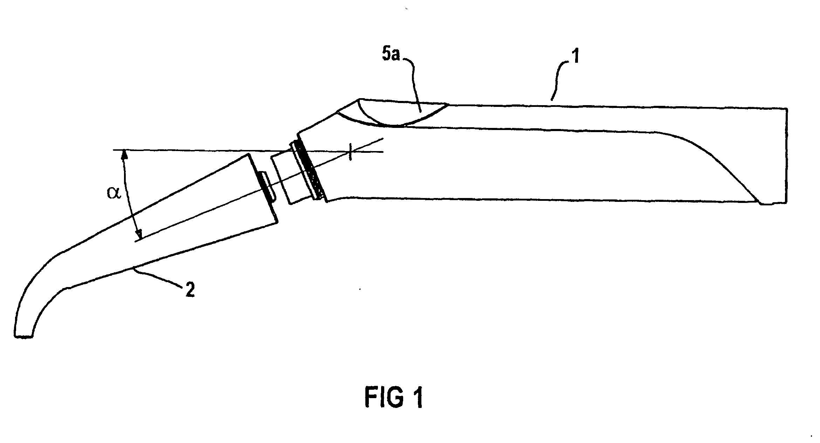

Die **Figur 1** zeigt ein zahnärztliches Spritzhandstück in einer Seitenansicht. Das Spritzhandstück enthält einen allgemein mit 1 bezeichneten Griffkörper, an dessen geradem einen Ende in bekannter Weise ein (nicht dargestellter) Versorgungsschlauch anschließbar ist und an dessen unter einem Winkel α von etwa 20 bis 55° abgewinkelten anderen Ende ein im abgenommenen Zustand gezeichneter Düsenkörper 2 angeordnet ist, an dessen freiem Ende Kanäle und Leitungen für die Medien Luft und/oder Wasser sowie Licht enden.

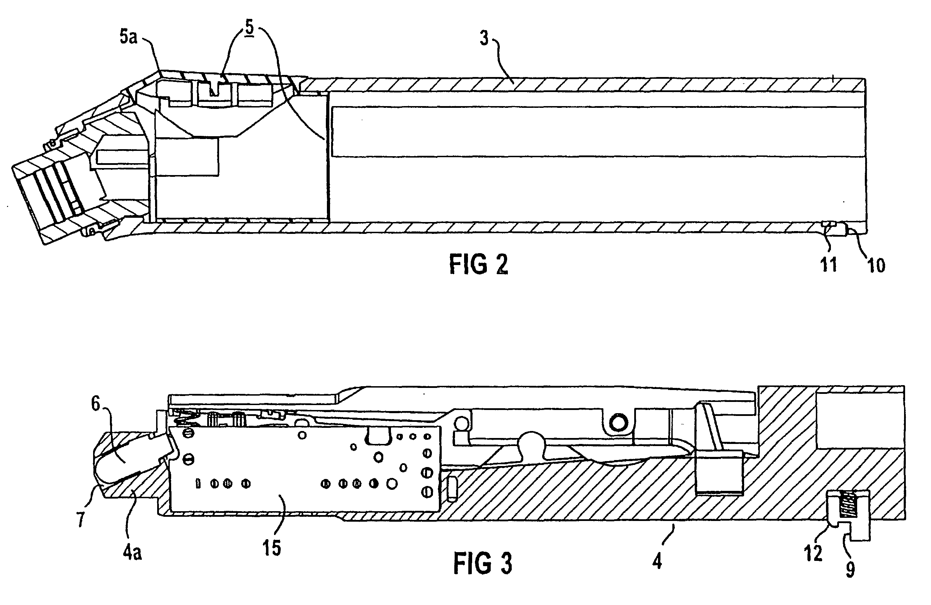

Der Griffkörper 1 umfaßt eine die äußere Kontur bildende Griffhülse 3, die in **Figur 2** im Längsschnitt dargestellt ist und einen Ventilkörper 4, der in **Figur 3** in dazu passender Seitenansicht dargestellt ist. Die Griffhülse 3 enthält ein schlauchförmig ausgebildetes Teil 5 welches in die Griffhülse 3 eingelegt ist und mit einer Kappe 5a aus einer entsprechend ausgebildeten Ausnehmung der Griffhülse vorsteht. Die Kappe 5a bildet ein Tastfeld für später noch näher erläuterte Betätigungselemente mit denen in bekannter Weise Ventile für die Medien Luft und/oder Wasser gesteuert werden können. Die Griffhülse weist sonst keine nicht sterilisierbaren Teile auf; sie enthält insbesondere keine elektrischen Bauteile. Der Ventilkörper 4 enthält diverse, anhand der nachfolgenden Figuren noch näher beschriebene Steuerelemente, mit denen der Durchfluß der Medien Luft und/oder Wasser sowie die Heizleistung von Heizelementen zur Erwärmung der Medien gesteuert und gegebenenfalls die Lampe 6 geschaltet werden können. Wie aus der nachfolgenden Beschreibung hervorgeht, sind alle diese Steuerelemente in kompakter Form im Ventilkörper 4 untergebracht.

Die Lampe 6 ist in einer Schrägbohrung 7 eines zapfenförmigen Vorsprunges 4a des Griffkörpers 4 angeordnet. Die Schrägbohrung 7 entspricht dem Winkel α, unter dem der Düsenkörper 2 in Relation zum Griffkörper 1 abgewinkelt ist. Im montierten Zustand steht die Lichtaustrittsfläche der Lampe 6 der Stirnfläche eines im Düsenkörper 2 angeordneten Lichtleiters korrespondierend gegenüber.

Die äußere Kontur des Ventilkörpers 4, insbesondere des Zapfens 4a, ist so bemessen, daß der Ventilkörper vom schlauchseitigen Ende axial in die Griffhülse 3 bis zu einem mit den Positionen 9 und 10 bezeichneten Anschlag eingeschoben und in dieser Position dann mittels einer Rasteinrichtung 11, 12 gerastet werden kann.

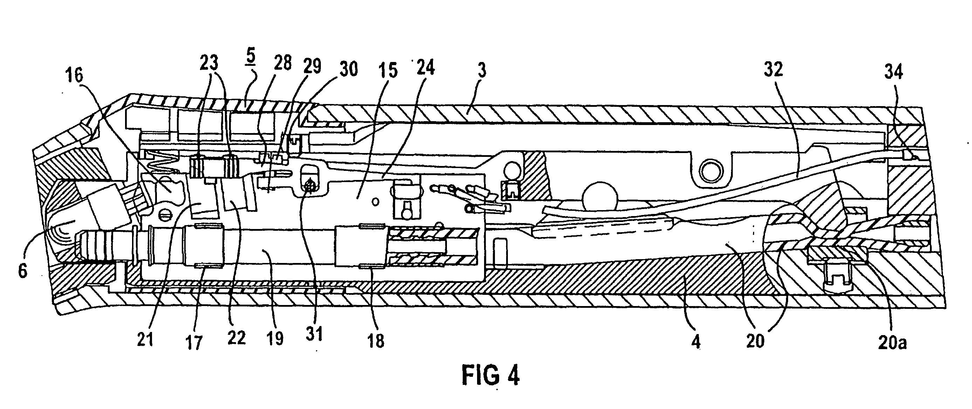

Die **Figur 4** zeigt den Hauptteil des komplett montierten Spritzhandstückes in Seitenansicht und im Längsschnitt.

Tragendes Element aller elektrischen Bauteile sowie teilweise auch einiger mechanischer Bauteile zur Steuerung des Medienflusses für die Medien Luft und Wasser ist eine Leiterplatte 15. Diese enthält erste Kontaktelemente 16 zur Halterung und Kontaktierung der Lampe 6 sowie zweite und dritte Kontaktelemente 17, 18 zur Halterung und Kontaktierung zweier, zu beiden Seiten der Leiterplatte 15 befindlicher Heizelemente in Form von Heizpatronen 19, mit denen die in Schlauchleitungen 20 geführten Medien erwärmt werden können.

Die einzelnen Kontakte der paarweise vorgesehenen Kontaktelemente 16, 17 und 18 (auf der gegenüberliegenden Seite der Leiterplatte 15 nicht bezeichnet) sind identisch gestaltet, so daß sie gleichsam auf der rechten wie auf der linken Seite(dort jedoch spiegelbildlich angeordnet) verwendet werden können.

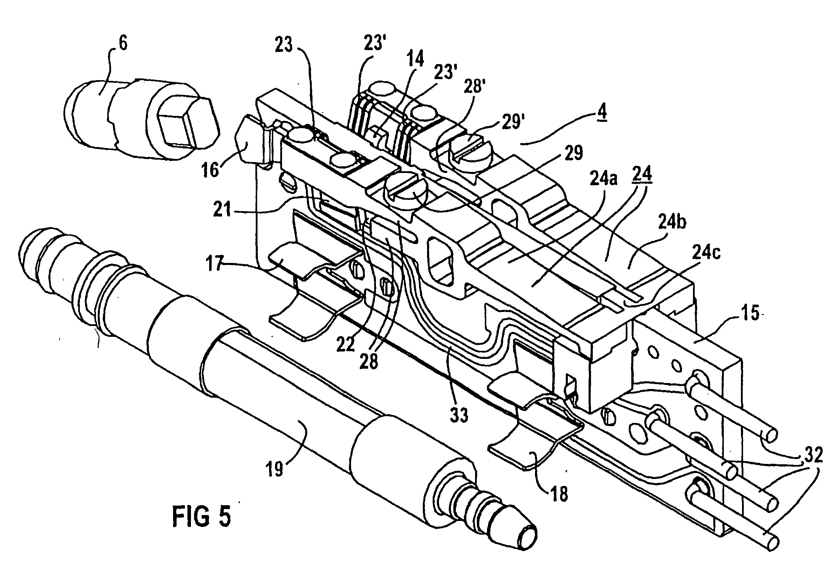

Die **Figur 5**, die die Leiterplatte 15 ohne Heizpatrone 19 in einer perspektivischen Schrägansicht von oben zeigt, läßt erkennen, daß in der oberen linken Hälfte der Leiterplatte eine Widerstandsbahn 21 sowie eine Kollektorbahn 22 nebeneinander angeordnet sind. Diese Bahnen wirken mit Schleifkontakten 23 zusammen und sind Teil einer Steuereinrichtung zur Steuerung der Heizleistung der Heizpatronen 19. Die vorgenannte Anordnung ist beidseitig der Leiterplatte 15 vorhanden.

Die Schleifkontakte 23, 23' sind an den einen, freien Enden eines zweiarmigen, einstückig aus Kunststoff gefertigten Schleiferträger 24 befestigt. Die beiden freien Enden der Arme 23a, 24b liegen mit Vorspannung auf den Widerstandsbahnen 21 an und werden mit Hilfe von Gleitschuhen 14 auf vorgegebenen Abstand gehalten Dadurch läßt sich eine geringere Hysterese bei der Steuerung der Heizleistung sicherstellen. Die beiden anderen Enden der Arme 24a und 24b sind durch eine gemeinsame Brücke 24c miteinander verbunden, mittels der sie auf der Leiterplatte 15 befestigt sind. Die Befestigung erfolgt zweckmäßigerweise durch Aufschnappen auf einen nicht näher bezeichneten Querstift.

Die beiden Arme 24a, 24b weisen jeweils Abschnitte 28, 28' unterschiedlicher Flexibilität bzw. Härte auf, die durch Stellschrauben 29, 29' miteinander verbunden sind. Mit den Stellschrauben 29, 29' können die Schleifkontake 23, 23' exakt auf die Widerstandswerte der Widerstandsbahnen 21 eingestellt werden. Mit einer weiteren Stellschraube 30 läßt sich eine Feinjustierung durchführen. Mit 31 ist ein im Ventilkörper 4 befestigter Querstift bezeichnet, der zur Transport-bzw. Handhabungssicherung dient und mit den sich die Schleiferarme 24 sichern lassen.

Die interne Verdrahtung auf der Leiterplatte 15, d.h.die Verbindung der auf der Leiterplatte befindlichen Bauteile mit den Anschlußleitungen 32 sowie gegebenenfalls der Bauteile untereinander erfolgt mittels Leiterbahnen 33. Die fest an der Leiterplatte 15 befestigten Anschlußleitungen 32 enden mit in Buchsen einsteckbaren Anschlußenden 34 auf.

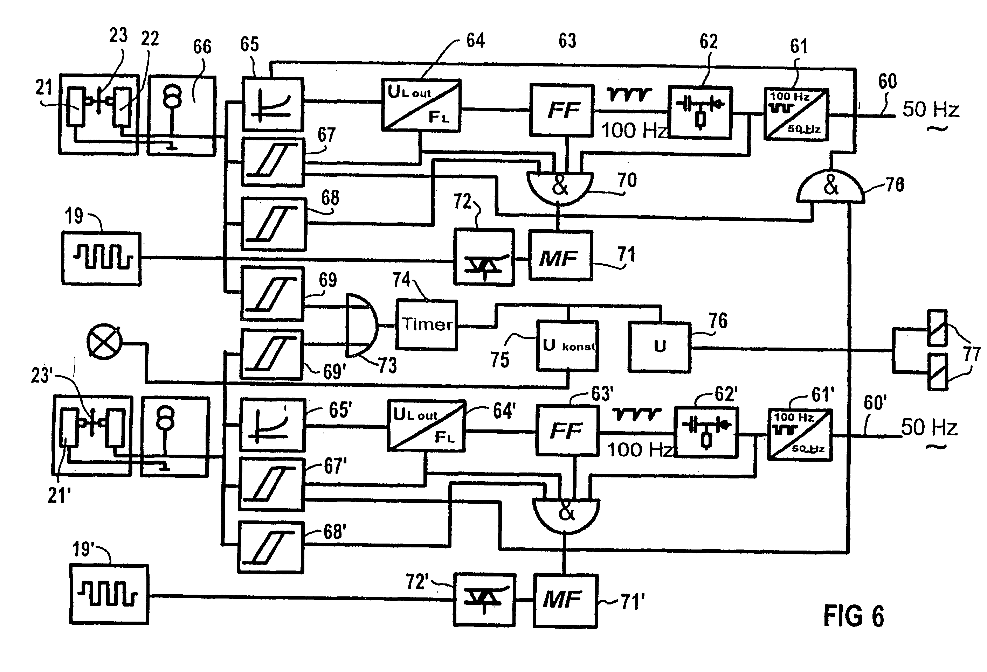

Die **Figur 6** zeigt ein Blockschaltbild mit den wesentlichen Elementen der erfindungsgemäßen Einrichtung. Nachdem die Schaltung für die Medien Luft und Wasser in ihren wesentlichen Elementen gleich aufgebaut ist, wird im folgenden nur der (obere) Teil der Schaltung der für die Erwärmung der Luft vorgesehen ist, beschrieben. Die analog zur Erwärmung des Mediums Wasser vorgesehenen Elemente weisen gleiche Bezugszeichen auf, sind jedoch mit einem Hochstrich versehen.

Ausgehend von einer mit 60 angedeutete Wechselspannungsquelle, die beispielsweise eine Spannung von 24 V bei einer Netzfrequenz von 50 Hz anbietet, werden in einem Generator 61 Rechteckimpulse mit der doppelten Netzfrequenz, hier also mit einer (ersten) Frequenz von 1oo Hz erzeugt. Aus diesen Rechteckimpulsen werden in einem nachfolgenden Differenzierer 62 Impulse mit negativen Flanken erzeugt, die einem Flip-Flop 63 zugeführt werden. Dem Flip-Flop 63 werden auch Signale, die aus einem Kennlinienentzerrer 65 abgeleitet werden, über einen Spannungsfrequenzwandler 64 zugeführt. Im Kennlinienentzerrer 65 wird das Spannungssignal aus einer Konstantstromquelle 66 bearbeitet, welches sich aus den Widerstandswerten der Widerstandsbahn 21 ergibt. Die Verwendung der Konstantstromquelle hat außer der Ersparnis einer Zuleitung den weiteren Vorteil, daß Widerstandsänderungen in den Zuleitungen keinen nennenswerten Einfluß auf das Verarbeitungsergebnis haben.

Aus Sicherheitsgründen ist es vorteilhaft, mit fallenden Widerstandswerten die Heizleistung zu erhöhen, d.h., im Ruhezustand bei nicht eingeschalteten Medien, greift der Schleifer 23 einen hohen Widerstandswert auf der Widerstandsbahn 21 ab. Bei einem auftretendem Fehler, wie z.B. Leitungsbruch, oder bei von der Versorgung getrenntem Handstück, wird keine Leistung von der Elektronik geliefert.

Im Kennlinienentzerrer 65 sind die durch Messung ermittelten Leistungsbedarfswerte (Leistung zu Widerstand) nachgebildet oder hinterlegt. Die am Ausgang des Kennlinienentzerrers 65 anliegende Spannung ist eine Funktion einerseits der Konstantstromquelle 66 und andererseits des UND-Gatters 78. Das Ausgangssignal dieses Gatters führt zu einer prozentualen Anhebung der Kennlinie im Wasser/Luft-(Spray-) Betrieb.

Im Spannungsfrequenzwandler 64 wird eine zweite, variable Frequenz in Abhängigkeit vom Kennlinienentzerrer 65 und damit vom Regelwiderstand 21 generiert.

Mit 67, 68, und 69 sind Komperatoren bezeichnet, von denen der mit 67 bezeichnete einerseits den Spannungsfrequenzwandler 64 einschaltet und andererseits zur Sicherung ein Signal auf das UND-Gatter 70 gibt. Wenn das UND-Gatter 70 an seinem Ausgang freigeschaltet ist, ergeht ein Steuersignal an ein Monoflop 71 welches einen Triac 72 für die Zeit einer Halbwelle zündet. Damit wird der Heizung 19 für die Zeit einer Halbwelle Leistung zugeführt, d.h. bei einer angenommenen maximalen Leistung von 130 W werden bei der angenommenen Frequenz von 50 Hz 1,3 W durchgeschaltet.

Das negierte Signal des Komparators 68 übernimmt eine Sicherheitsfunktion. Bei Unterschreiten eines Schwellwertes (Kurzschluß) wird die Spannung der Lampe 6 und die Leistung für die Heizung 19 abgeschaltet.

Mit dem Komparator 69 werden über ein ODER-Gatter 73 ein Timer 74, aktiviert, der die Spannungsversorgungen 75 für die Lampe 6 sowie 76 für Magnetventile 77 ,über die die Bereitstellung der Medien erfolgt, einschaltet.

Das ODER-Gatter 73 ist auch in äquivalenter Weise vom Komparator 69' für das andere Medium aktivierbar.

Die Komparatoren 67 und 67' steuern das UND-Gatter 78 an. Das UND-Gatter 78 hat die Aufgabe, dann, wenn beide Medien eingeschaltet sind, (im vorliegenden Fall Spray-Betrieb), den Kennlinienentzerrer 65 , wie vorerwähnt, zu einer prozentualen Anhebung der Kennlinie des einen Mediums im Spraybetrieb zu veranlassen. Im vorliegenden Fall erfolgt eine Anhebung der Leistung von Luft.

Denkbar und im Rahmen der Erfindung liegt es, daß auch der Kennlinienentzerrer 65' des anderen Mediums ebenfalls eine Leistungserhöhung (gegebenenfalls Leistungsverringerung) durchführt.

Durch die Verarbeitung der 100 Hz-Frequenz, generiert aus der 50-Hz-Frequenz, und der Frequenz aus dem Spannungsfrequenzwandler 64 ist eine kontinuierliche Ansteuerung aller ganzzahligen Halbwellen (positive wie negative) von einer Halbwelle in einer Zeiteinheit bis zur vollen Durchschaltung aller Halbwellen in der gleichen Zeiteinheit möglich.

Die Vorderflanken der vom Spannungsfrequenzwandler 64 erzeugten Impulse setzen das Flip-Flop 63; die Vorderflanken des Frequenzgenerators 61 schalten das UND-Gatter 70 im nächstfolgenden Nulldurchgang der Wechselstromspannungsquelle 60 frei. Damit kann durch die Bauteile 71 und 72 eine Heizleistungssteuerung erfolgen. Die differenzierten Rückflanken aus dem Differenzierer 62 setzen das Flip-Flop 63 nach erfolgter Leistungsabgabe wieder zurück.

Anstelle der beschriebenen elektrischen Geber in Form der aufgezeigten Widerstandsbahnen sind auch andere Geber , wie z.B. kapazitive, magnetische, oder optische Geber denkbar und einsetzbar.

Obgleich die beschriebene Schaltungsanordnung für Analogtechnik ausgelegt ist, liegt es im Rahmen der Erfindung, die erfindungsgemäßen Merkmale entsprechend auch in Digitaltechnik anzuwenden. In diesem Zusammenhang sei auch erwähnt, daß im Kennlinienentzerrer 65 abgelegten Kenndaten auch in Tabellenform in einem Prozessor hinterlegt sein können. Das gleiche gilt auch für eine Temperaturanhebung im Falle des erwähnten Spray-Betriebs.

## Patentansprüche

1. Verfahren zur Steuerung der Heizleistung eines Heizelementes zur Erwärmung von relativ kleinen Mengen eines Mediums wie Luft und/oder Wasser, in einem zahnärztlichen Gerät, insbesondere in einem Spritzhandstück, **dadurch gekennzeichnet, dass** ein elektronischer Versorgungsbaustein (65) vorgesehen ist, in welchem mehrere Kennlinien für unterschiedliche Medientemperaturen abgelegt sind, aus denen in Abhängigkeit von einer Durchflußmengenvorgabe eine der Vorgabe entsprechende elektrisch verarbeitbare Größe abgeleitet wird, die einer bestimmten, der gewählten Medientemperatur zugeordneten Heizleistung entspricht.

2. Verfahren nach Anspruch 1, bei dem die Heizleistung durch Halb- oder Vollwellen einer Wechselspannung zur Verfügung gestellt wird, wobei die Leistungsabstufung durch eine Ansteuerung der Halb- oder Vollwellen erfolgt, und zwar von einer Halb- oder Vollwelle in einer Zeiteinheit bis zur vollen Durchschaltung aller Halb- oder Vollwellen in der gleichen Zeiteinheit.

3. Verfahren nach Anspruch 2, bei dem die Halb- oder Vollwellen quasi-gleichmäßig über die Zeit verteilt angesteuert werden.

4. Verfahren nach einem der Ansprüche 1 bis 3, bei dem eine Einrichtung vorgesehen ist die eine Konstantstromquelle (66) umfaßt, die mit Signalgebern (21, 21') zusammenwirkt, aus denen die elektrisch verarbeitbaren Größen abgeleitet werden.

5. Verfahren nach Anspruch 4, bei dem das von der Konstantstromquelle (66) gewonnene Signal in einem als Kennlinienentzerrer ausgebildeten Verarbeitungsbaustein (65) bearbeitet wird, in dem mehrere durch Messung ermittelte Leistungsbedarfswerte nachgebildet oder hinterlegt sind.

6. Verfahren nach Anspruch 5, bei dem in Abhängigkeit von den aus dem Verarbeitungsbaustein (65) erhaltenen Signalen in einem Spannungsfrequenzumwandler (64) eine (zweite) variable Frequenz generiert wird, die zusammen mit der aus der Netzfrequenz erzeugten (ersten) Frequenz in einem Flip-Flop (63), einem Differenzierer (62) und einem UND-Gatter (70) verarbeitet wird, wobei über den Ausgang des UND-Gatters (70) ein Leistungsanforderungsimpuls abgegeben wird.

7. Verfahren nach einem der Ansprüche 4 bis 6, bei dem als Signalgeber elektrische Geber (21, 21') eingesetzt sind.

8. Verfahren nach Anspruch 7, bei dem die Geber (21, 21') so geschaltet sind, daß im Falle eines Fehlers, wie z. B. Leitungsbruch, keine Leistung geliefert wird.

9. Verfahren nach einem der Ansprüche 1 bis 8, bei dem die elektrisch verarbeitbare Größe durch einen veränderbaren Widerstand, vorzugsweise in Form einer flachen Widerstandsbahn (21, 21') gebildet ist.

10. Verfahren nach Anspruch 9, bei dem der veränderbare Widerstand aus einer Kombination von Widerstandsbahn (21, 21'), Kollektorbahn (22,22') und Schleiferkontakt (23,23') gebildet ist.

11. Verfahren nach einem der Ansprüche 1 bis 10, bei dem Mittel (67,78) vorgesehen sind, die bei Betrieb beider Medienheizungen (19, 19') zumindest bei dem einen Medium deren Heizleistung gegenüber der Heizleistung im Einzelbetrieb anheben.

## Claims

1. Method of controlling the heating power of a heating element for heating up relatively small amounts of a medium, such as air and/or water, in a dental implement, in particular in a spray handpiece, **characterized in that** an electronic supply module (65) is provided, in which a plurality of characteristic curves for different media temperatures are stored, from which an electrically processable variable is derived on the basis of a specified flow rate and corresponds to the specification and to a specific heating power assigned to the chosen media temperature.

2. Method according to Claim 1, in which the heating power is made available by half or full waves of an a.c. voltage, the power being graduated by activation of the half or full waves, to be precise from one half or full wave in one unit of time to the full switching through of all the half or full waves in the same unit of time.

3. Method according to Claim 2, in which the half or full waves are activated in a quasi-uniform distribution over time.

4. Method according to one of Claims 1 to 3, in which there is provided a device which comprises a constant current source (66), which interacts with signal generators (21, 21') from which the electrically processable variables are derived.

5. Method according to Claim 4, in which the signal obtained from the constant current source (66) is processed in a processing module (65) which is designed as a characteristic corrector and in which a plurality of power requirement values, determined by measurement, are replicated or stored.

6. Method according to Claim 5, in which a (second) variable frequency is generated on the basis of the signals obtained from the processing module (65) in a voltage frequency converter (64) and is processed together with the (first) frequency, generated from the mains frequency, in a flipflop (63), a differentiator (62) and an AND gate (70), with a power requirement pulse being emitted via the output of the AND gate (70).

7. Method according to one of Claims 4 to 6, in which electrical sensors (21, 21') are used as signal generators.

8. Method according to Claim 7, in which the sensors (21, 21') are connected in such a way that, in the event of a fault, such as a line interruption, no power is supplied.

9. Method according to one of Claims 1 to 8, in which the electrically processable variable is formed by a variable resistor, preferably in the form of a flat resistor run (21, 21').

10. Method according to Claim 9, in which the variable resistor is formed from a combination of a resistor run (21, 21'), a collector run (22, 22') and a sliding-action contact (23, 23').

11. Method according to one of Claims 1 to 10, in which there are provided means (67, 78) which, during the operation of both media heaters (19, 19'), raise the heating power at least of one medium in comparison with the heating power in individual operation.

## Revendications

1. Procédé pour commander la puissance de chauffage d'un élément chauffant destiné à chauffer des quantités assez faibles d'agent comme l'air et / ou l'eau dans un instrument dentaire , notamment dans une pièce à main à jet, **caractérisé en ce qu'**un module d'alimentation (65) électronique est prévu, dans lequel sont déposées plusieurs lignes caractéristiques pour plusieurs températures d'agent différentes, à partir desquelles lignes caractéristiques on peut déduire, en fonction d'un débit sélectionné, une grandeur électrique susceptible d'être traitée selon la sélection correspondant à une puissance de chauffage déterminée associée à la température d'agent choisie.

2. Procédé selon la revendication 1, dans lequel la puissance de chauffage est mis à disposition au moyen des demi-ondes ou des ondes pleines; la graduation de puissance étant effectuée par activation des demi-ondes ou ondes pleines, c'est à dire par activation d'une demi-onde ou onde pleine dans une unité de temps jusqu'à une activation complète de toutes les demi-ondes ou ondes pleines dans la même unité de temps.

3. Procédé selon la revendication 2, dans lequel les demi-ondes ou ondes pleines sont activées par répartition temporelle quasiment régulière.

4. Procédé selon une des revendications 1 à 3, dans lequel il est prévu un dispositif comportant une source de courant constant (66) coopérant avec des générateurs de signaux (21, 21') à partir desquels sont déduites des grandeurs susceptibles d'être traitées électriquement.

5. Procédé selon la revendication 4, dans lequel le signal obtenu à partir de la source de courant constant (66) est traité dans un module de traitement (65) formé en tant qu'égaliseur à ligne caractéristique , dans lequel module plusieurs valeurs de besoin de puissance , déterminées par des mesures, sont reproduites ou déposées.

6. Procédé selon la revendication 5, dans lequel une (deuxième) fréquence variable est générée en fonction des signaux obtenus à partir du module de traitement (65), laquelle fréquence variable est traitée ensemble avec la (première) fréquence générée à partir de la fréquence du réseau, dans un flip-flop (63), un différentiateur (62) et une porte ET (70); une impulsion de demande de puissance étant émise à travers de la sortie de la porte ET (70).

7. Procédé selon une des revendications 4 à 6, dans lequel des générateurs électriques (21, 21') sont employés en tant que générateur de signaux.

8. Procédé selon la revendication 7, dans lequel les générateur (21, 21') sont connectés de telle manière qu'en cas de panne , comme par exemple, une rupture de conduite, aucune puissance ne soit fournie.

9. Procédé selon une des revendications 1 à 8, dans lequel la grandeur électrique susceptible d'être traitée, est réalisée par une résistance variable , de préférence sous la forme d'une piste de résistance (21, 21') plate.

10. Procédé selon la revendication 9, dans lequel la résistance variable est formée par la combinaison d'une piste de résistance (21, 21'), d'une piste de collecteur (22, 22') et d'un contact frotteur (23, 23').

11. Procédé selon une des revendications 1 à 10, dans lequel des moyens (67, 78) sont prévus qui augmentent, lorsque les deux chauffages d'agent (19, 19') sont en service, et ce au moins pour un agent, la puissance de chauffage par rapport à la puissance de chauffage lorsqu'un chauffage d'agent est en service.
